# EUROPEAN PATENT APPLICATION

(11) **EP 3 560 938 A1**
(43) Date of publication of application: **30.10.2019**
(21) Application number: 18168977.9
(22) Date of filing: 24.04.2018
(51) Int. Cl.: C07F 9/53

(54) **LUMINESCENT ALKENYL-PHOSPHORUS CONTAINING MATERIALS**

(71) Applicant: Henkel AG & Co. KGaA, 40589 Düsseldorf (DE)
(72) Inventor: Schäfer, Sascha Wilhelm, 40822 Mettmann (DE); Zhao, Ligang, 40593 Düsseldorf (DE); Studer, Amido, 48149 Münster (DE)

(57) **Abstract**

The invention pertains to a method for the synthesis of specific alkenyl-phosphorous compounds according to formula (I). Furthermore, the invention relates to compounds obtained by this method, and compositions comprising the compounds of the present invention, wherein the compositions are compositions for lighting applications, optical applications, microelectronic compounds, optical brighteners or are detergent compositions. Finally, the invention relates to the use of the compounds of the present invention in lighting applications, optical applications, microelectronic compounds, optical brighteners or detergent compositions.

## Description

The invention pertains to a method for the synthesis of specific alkenyl-phosphorous compounds according to formula (I), as defined herein, comprising or consisting of the steps: reacting a compound of formula (II), as defined herein, with a compound of formula (III), as defined herein, wherein the reaction is carried out in the presence of oxygen and the equivalent ratio of compounds of formula (II) and (III) is 1:1. Furthermore, the invention relates to compounds obtained by this method, and compositions comprising the compounds of the present invention, wherein the compositions are compositions for lighting applications, optical applications, microelectronic compounds, optical brighteners or are detergent compositions. Finally, the invention relates to the use of the compounds of the present invention in lighting applications, optical applications, microelectronic compounds, optical brighteners, or detergent compositions.

Various synthesis methods for alkenyl-phosphorous compounds are known in the art. However, the presently known methods have drawbacks like the need for a transition metal catalyst. Such a method using alkenes as starting material is, for example, disclosed in Tanaka et al, J. Am. Chem. Soc. 2000, 122, 5407-5408. However, by employing a transition metal catalyst, the method is expensive because of the high costs for the catalyst, and additionally the catalyst has to be removed from the final product, which is labor intensive, requires time and creates additional cost. Moreover, such reactions, due to the catalysts, often have to be performed in inert gas atmosphere which requires rather sophisticated and expensive equipment.

Moreover, further methods using alkenes are known, which require rather harsh conditions, namely alkalinity and reaction temperatures of about 100 °C, as for example disclosed in Koenig et al, J. Org. Chem. 1997, 62, 2414-2422.

It was thus an object of the present invention to provide an improved method, which is less challenging and more environmentally friendly by reducing the overall energy consumption of the method, and preferably waste in form of solvents.

In this regard, the inventors of the present invention have surprisingly found that the afore-mentioned problems can be solved by the specific method of the present invention.

Therefore, in a first aspect, the present invention pertains to a method for producing a compound of formula (I): 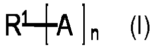 wherein in formula (I)
R¹ is selected from hydrogen or a substituted or unsubstituted C₁₋₄₀ hydrocarbon group, wherein the group optionally contains at least one heteroatom, preferably O, N or S;
n is an integer of 1 to 4, with the proviso that if R¹ is hydrogen, n is 1; and
A is a group represented by formula (a): 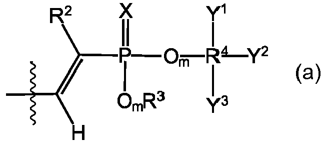
   wherein R² is selected from hydrogen or a substituted or unsubstituted C₁₋₄₀ hydrocarbon group,
   wherein the group optionally contains at least one heteroatom, preferably O, N or S; X is independently O or S;
   R³ and R⁴ are independently selected from a substituted or unsubstituted C₁₋₄₀ hydrocarbon group, wherein the group optionally contains at least one heteroatom, preferably O, N or S;
   m is independently 0 or 1;
   Y¹, Y² and Y³ are independently selected from hydrogen, -F, -Cl, -Br, -NH₂, -NHR⁵, with R⁵ being a C₁₋₁₆ alkyl, preferably a C₁₋₄ alkyl, and L, wherein at least one of Y¹, Y² and Y³ is L; and L is a group of following formula (b) 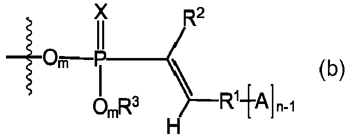 wherein, A, n and R¹ are defined as in formula (I) and R², R³, X and m are defined as in formula (a);
      the method comprising or consisting of the steps:
      reacting a compound of formula (II) 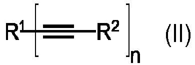 wherein R¹, R², and n are defined as in formula (I),
      with a compound of formula (III) 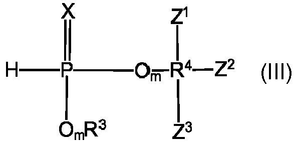 wherein
      R⁴ is defined as in formula (I);
      Z¹, Z² and Z³ are independently selected from hydrogen, -F, -Cl, -Br, -NH₂, -NHR⁵, with R⁵ being a C₁₋₁₆ alkyl, preferably a C₁₋₄ alkyl, and M, wherein at least one of Z¹, Z² and Z³ is M;
      M is a group of following formula (c) 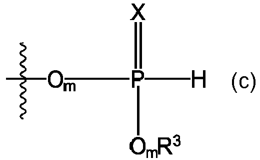
      wherein R³, X and m are defined as in formula (I),
      wherein the reaction is carried out in the presence of oxygen and the equivalent ratio of compounds of formula (II) and (III) is 1:1.

With this method for the production of alkenyl phosphorus compounds, which is based on alkyne compounds as starting materials, neither a catalyst, harsh conditions nor a high reaction temperature is necessary. The improved method is thus cheaper, needs less process steps and is less energy consuming compared to the known processes.

In a second aspect, the invention refers to a compound obtainable by the method of the present invention.

In a further aspect, the invention pertains to composition comprising at least one compound obtainable by the method of the present invention or at least one compound of formula (I): 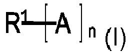 wherein in formula (I)
R¹ is selected from hydrogen or a substituted or unsubstituted C₁₋₄₀ hydrocarbon group, wherein the group optionally contains at least one heteroatom, preferably O, N or S;
n is an integer of 1 to 4, with the proviso if R¹ is hydrogen, n is 1; and
A is a group represented by formula (a): 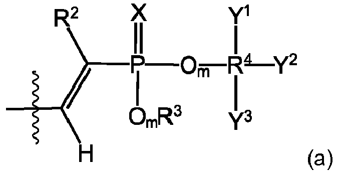
   wherein R² is selected from hydrogen or a substituted or unsubstituted C₁₋₄₀ hydrocarbon group, wherein the group optionally contains at least one heteroatom, preferably O, N or S;
   X is independently O or S;
   R³ and R⁴ are independently selected from a substituted or unsubstituted C₁₋₄₀ hydrocarbon group, wherein the group optionally contains at least one heteroatom, preferably O, N or S;
   m is independently 0 or 1;
   Y¹, Y² and Y³ are independently selected from hydrogen, -F, -Cl, -Br, -NH₂, -NHR⁵, with R⁵ being a C₁₋₁₆ alkyl, preferably a C₁₋₄ alkyl, and L, wherein at least one of Y¹, Y² and Y³ is L;
   and L is a group of following formula (b) 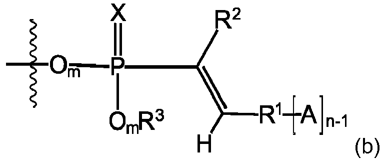 wherein, A, n and R¹ are the same as in formula (I) and R², R³, X and m are the same as defined in formula (a), and wherein the composition is a composition for lighting applications, optical applications, microelectronic compounds, optical brighteners, or is a detergent composition.

Exemplary lighting applications include LED or OLED. Exemplary optical applications are displays. A preferred field of use for optical brighteners are detergent formulations or polymer matrixes such as polyacrylates, epoxies, and hot melts for adhesive, molding and sealing applications.

Finally, the use of at least one compound obtainable by the method of the present invention or of at least one compound of formula (I): 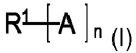 wherein in formula (I)
R¹ is selected from hydrogen or a substituted or unsubstituted C₁₋₄₀ hydrocarbon group, wherein the group optionally contains at least one heteroatom, preferably O, N or S;
n is an integer of 1 to 4, with the proviso if R¹ is hydrogen, n is 1; and
A is a group represented by formula (a): 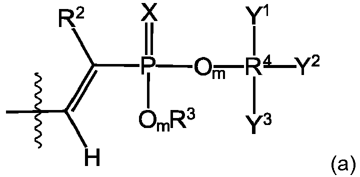
   wherein R² is selected from hydrogen or a substituted or unsubstituted C₁₋₄₀ hydrocarbon group, wherein the group optionally contains at least one heteroatom, preferably O, N or S;
   X is independently O or S;
   R³ and R⁴ are independently selected from a substituted or unsubstituted C₁₋₄₀ hydrocarbon group, wherein the group optionally contains at least one heteroatom, preferably O, N or S;
   m is independently 0 or 1;
   Y¹, Y² and Y³ are independently selected from hydrogen, -F, -Cl, -Br, -NH₂, -NHR⁵, with R⁵ being a C₁₋₁₆ alkyl, preferably a C₁₋₄ alkyl, and L, wherein at least one of Y¹, Y² and Y³ is L;
   and L is a group of following formula (c) 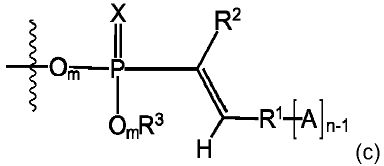 wherein, A, n and R¹ are the same as in formula (I) and R², R³, X and m are the same as defined in formula (a), in lighting applications, optical applications, microelectronic compounds, optical brighteners, or detergent compositions is an additional aspect of the present invention.

Further preferred embodiments are set forth in the appended claims.

In the following, the invention is described in greater detail. It is however understood that the present invention is not limited to the below embodiments.

In the present specification, the terms "a" and "an" and "at least one" are the same as the term "one or more".

"At least one" means one or more, i.e. 1, 2, 3, 4, 5, 6, 7, 8, 9, or more. "At least one", as used herein in relation to any component, refers to the number of chemically different molecules, i.e. to the number of different types of the referenced species, but not to the total number of molecules. For example, "at least one alkyne" means that at least one type of molecule falling within the definition for alkyne is used but that also two or more different molecule types falling within this definition can be present, but does not mean that only one molecule of said alkyne is present.

All percentages given herein in relation to the compositions or formulations relate to weight % relative to the total weight of the respective composition or formula, if not explicitly stated otherwise.

If a specific alkyl is disclosed, it is referred to all isomers of this alkyl, i.e. linear and branched isomers, if not explicitly stated otherwise. For example if the term "butyl" is disclosed, the term includes "n-butyl, iso-butyl, sec-butyl, and tert-butyl".

The term "essentially without solvent" means that in the reaction preferably less than 5 wt.-%, more preferably less than 1 wt.-%, most preferably less than 0.1 wt.-% or no solvent is present, based on the total weight of the composition.

In the compounds of formula (I) even though the group R¹ has been depicted as an (E) isomer, not only (E) isomers are claimed but (E) and (Z) isomers are encompassed, since the addition reaction is in general not stereoselective. Depending on the substituents, only (E) or (Z) isomers or mixtures of those can be present.

In the present invention, it is important that the reaction is carried out in the presence of oxygen; preferably at least 500 ppm, more preferably at least 10.000 ppm of oxygen are present. In the most preferred embodiment the reaction is carried out in the presence of air.

The specific alkenyl-phosphorous compounds of the present invention are represented by formula (I): 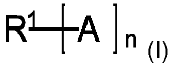 wherein in formula (I)
R¹ is selected from hydrogen or a substituted or unsubstituted C₁₋₄₀ hydrocarbon group, wherein the group optionally contains at least one heteroatom, preferably O, N or S;
n is an integer of 1 to 4, preferably 1 or 2, more preferably 2, with the proviso if R¹ is hydrogen, n is 1; and
A is a group represented by formula (a): 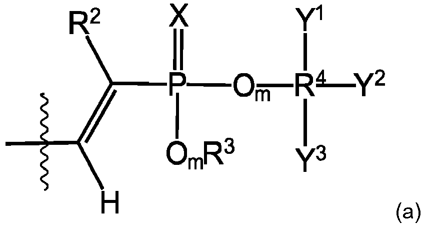
   wherein R² is selected from hydrogen or a substituted or unsubstituted C₁₋₄₀ hydrocarbon group,
   wherein the group optionally contains at least one heteroatom, preferably O, N or S;
   X is independently O or S;
   R³ and R⁴ are independently selected from a substituted or unsubstituted C₁₋₄₀ hydrocarbon group, wherein the group optionally contains at least one heteroatom, preferably O, N or S; m is independently 0 or 1;
   Y¹, Y² and Y³ are independently selected from hydrogen, -F, -Cl, -Br, -NH₂, -NHR⁵, with R⁵ being a C₁₋₁₆ alkyl, preferably a C₁₋₄ alkyl, and L, wherein at least one, preferably at least two of Y¹, Y² and
   Y³ is (are) L;
   and L is a group of following formula (b) 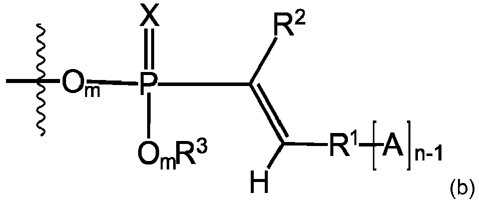 wherein, A, n and R¹ are the same as in formula (I) and R², R³, X and m are the same as defined in formula (a).

According to the present invention, the optional substituent of a group can be selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

In the following, preferred embodiments will be disclosed for the different groups of formulas (I) to (III). With regard to R¹ it is pointed out that in the following only the monovalent groups are explicitly mentioned which are present if n is 1. However, the respective multivalent groups are encompassed for R¹ as well. For example, if it is disclosed that R¹ can be methyl (n = 1), it is understood that the options of it being a methylene bridge (n = 2), methanetriyl (n = 3) and a fourfold substituted carbon atom (n = 4) are encompassed as well.

In a preferred embodiment R¹ and R² are independently selected from hydrogen or a group selected from methyl, ethyl, substituted or unsubstituted, branched, linear or cyclic C₃₋₄₀ alkyl, wherein the substituted or unsubstituted, branched, linear or cyclic C₃₋₄₀ alkyl group can contain at least one heteroatom, preferably O, N or S; allyl; substituted or unsubstituted branched, linear or cyclic C₃₋₄₀ alkenyl, wherein the substituted or unsubstituted branched, linear or cyclic C₃₋₄₀ alkenyl group can contain at least one heteroatom, preferably O, N or S; substituted or unsubstituted aryl, which can contain at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

The term "aryl" as used in the present invention means a group which has an aromatic backbone or comprises several aromatic groups either directly or indirectly linked with each other, e.g. via an alkyl group. Examples are phenyl, naphthyl, anthryl, biphenyl, or triphenyl groups.

In a more preferred embodiment R² is hydrogen and/or
R¹ is selected from a group selected from methyl, ethyl, substituted or unsubstituted, branched, linear or cyclic C₃₋₄₀ alkyl, wherein the substituted or unsubstituted, branched, linear or cyclic C₃₋₄₀ alkyl group optionally contains at least one heteroatom, preferably O, N or S; allyl; substituted or unsubstituted, branched, linear or cyclic C₄₋₄₀ alkenyl, wherein the C₄₋₄₀ alkenyl group optionally contains at least one heteroatom, preferably O, N or S; substituted or unsubstituted C₆₋₁₈ aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

In an even more preferred embodiment R² is hydrogen and/or R¹ is selected from a group selected from methyl, ethyl, substituted or unsubstituted, branched, linear or cyclic C₃₋₁₅ alkyl which optionally contains at least one heteroatom, preferably O, N, S, more preferably O; substituted or unsubstituted C₆₋₁₈ aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

In an especially preferred embodiment, R² is hydrogen and/or R¹ is a group selected from methyl, ethyl, propyl, butyl, pentyl, hexyl, in particular the linear isomers thereof, ethylether, methylether, propylether, butylether, ethyl diether, propyl diether, butyl diether, ethyl triether, propyl triether, butyl triether, phenyl, methoxycarbonyl, ethoxycarbonyl, propoxycarbonyl, butoxycarbonyl, pentoxycarbonyl, hexoxycarbonyl, methylene methylamine, methylene ethylamine, methylene propylamine, methylene butylamine, methylene dimethyldiamine, methylene diethyldiamine, methylene dipropyl diamine, methylene dibutyl diamine, methylene triamine, methylene mono-, di-, tri-methyl triamine, methylene mono-, di-, tri-ethyl triamine, methylene mono-, di-, tri-propyl triamine, methylene mono-, di-, tri-butyl triamine, methylene oxycarboxymethyl, methylene oxycarboxyethyl, methylene oxycarboxybutyl, methylene aminocarboxymethyl, methylene aminocarboxyethyl, methylene aminocarboxybutyl and their mixtures.

In further preferred embodiments R³ and R⁴ are independently selected from a group selected from methyl, ethyl, substituted or unsubstituted, branched, linear or cyclic C₃₋₄₀ alkyl, wherein the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, wherein the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl. This limitation is in particular preferred in combination with any of the above-mentioned embodiments of R¹ and R².

In an even more preferred embodiment R³ and R⁴ are independently selected from a group selected from methyl, ethyl, substituted or unsubstituted, branched, linear or cyclic C₃₋₁₅ alkyl, substituted or unsubstituted C₆₋₁₈ aryl, which optionally contains at least one heteroatom, preferably O, N or S, in its ring, wherein the at least one optional substituent of the afore-mentioned groups is selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl. This limitation is particularly preferred in combination with any of the above-mentioned embodiments of R¹ and R².

Especially preferred groups of R³ and R⁴ are methyl, ethyl, propyl, butyl, pentyl, hexyl, in particular the linear isomers thereof, phenyl, biphenyl, and triphenyl. In an especially preferred embodiment R³ is hydrogen,methyl, ethyl, propyl, butyl, hexyl, heptyl, octyl, nonyl, decyl, phenyl, heteroaryl containing N,S,O (e.g. pyridinyl, imidazoyl, oxazoyl, thiophenyl, furanyl) with and without substituents such as aryl, OH, CN, NH₂, N(alkyl)₂, OMe, OEt, COMe, COEt, CO₂Me, CO₂Et, CONMe₂, CONEt₂, NO₂, SO₃H, SO₃Na, SOalkyl, PO₄H₂, PO₄Na₂, S-Alkyl, S-Aryl, or their mixtures, and/or R⁴ is phenyl, biphenyl, triphenyl, condensed carbon-cycles such as naphthyl, anthracenyl, pyrenyl etc., heteroaryl containing N,S,O (e.g. pyridin, imidazol, oxazol, thiophen, furan), all with and without substituents such as aryl, OH, CN, NH2, N(alkyl)₂, OMe, OEt, COMe, COEt, CO₂Me, CO₂Et, CONMe₂, CONEt₂, NO₂, SO₃H, SO₃Na, SOalkyl, PO₄H₂, PO₄Na₂, S-Alkyl, S-Aryl or their mixtures. This limitation is particularly preferred in combination with any of the above-mentioned embodiments of R¹ and R². It is especially preferred that R³ and R⁴ are both the same.

In most preferred embodiments in addition to the restriction of any one of the above-mentioned embodiments in view of R¹ and R² and/or R³ and R⁴, n is 1 to 3, more preferably 1 or 2, most preferably 2.

In most preferred embodiments in addition to the restriction of any one of the above-mentioned embodiments in view of R¹ and R², and/or R³ and R⁴, and/or n, both m are 0 or 1, preferably 0.

In further most preferred embodiments in addition to the restriction of any one of the above-mentioned embodiments in view of R¹ and R², and/or R³ and R⁴, and/or n and/or m, X is O.

In further most preferred embodiments in addition to the restriction of any one of the above-mentioned embodiments in view of R¹ and R², and/or R³ and R⁴, and/or n and/or m, at least two of Y¹, Y² and Y³ are L.

With regard to the optional substituent of the afore-mentioned groups, they can be selected from -F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

In order to obtain the preferred embodiments for the compounds of formula (I) as disclosed above, the substituents in the starting materials, i.e., compounds of formula (II) and formula (III) are the same as stated above, respectively.

In the method according to the present invention, the reaction can be performed in an organic solvent, preferably a C₂₋₁₂ alcohol, a C₂₋₁₂ ether, toluene, dimethyl sulfoxide, acetone, benzene, dichloromethane, a mixture thereof or essentially without solvents. It is especially preferred that dichloromethane is used.

In the method according to the present invention, the reaction is preferably performed at 20 to 150°C, preferably at 20 to 80 °C, more preferably 20 to 75 °C, most preferably 20 to 40 °C.

Furthermore, the reaction is preferably performed for 1 minute to 2 weeks, more preferably 1 hour to 24 hours, most preferably 5 hours to 12 hours.

In a preferred embodiment the compound of formula (I) has a weight averagemolecular weight of 500 g/mol to 1000000 g/mol, preferably 1000 g/mol to 100000 g/mol, measured with gel permeation chromatography. As standard polystyrene can be used.

In a further preferred embodiment the at least one compound of formula (II) is distilled prior to use in the reaction.

In compositions comprising at least one compound obtainable by the method of the present invention or at least one compound of formula (I): 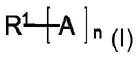 wherein in formula (I)
R¹ is selected from hydrogen or a substituted or unsubstituted C₁₋₄₀ hydrocarbon group, wherein the group optionally contains at least one heteroatom, preferably O, N or S;
n is an integer of 1 to 4, preferably 1 or 2, more preferably 2, with the proviso if R¹ is hydrogen, n is 1; and
A is a group represented by formula (a): 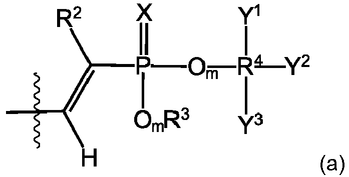
wherein R² is selected from hydrogen or a substituted or unsubstituted C₁₋₄₀ hydrocarbon group,
wherein the group optionally contains at least one heteroatom, preferably O, N or S;
X is independently O or S;
R³ and R⁴ are independently selected from a substituted or unsubstituted C₁₋₄₀ hydrocarbon group, wherein the group optionally contains at least one heteroatom, preferably O, N or S; m is independently 0 or 1;
Y¹, Y² and Y³ are independently selected from hydrogen, are independently selected from hydrogen, -F, -Cl, -Br, -NH₂, -NHR⁵, with R⁵ being a C₁₋₁₆ alkyl, preferably a C₁₋₄ alkyl, and L, wherein at least one, preferably at least two of Y¹, Y² and Y³ is (are) L;
and L is a group of following formula (b) 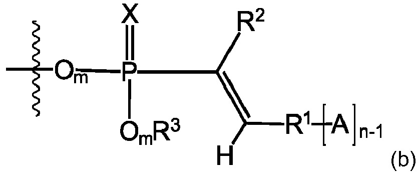 wherein, A, n and R¹ are the same as in formula (I) and R², R³, X and m are the same as defined in formula (a); and wherein the composition is a composition for lighting applications, optical applications, microelectronic compounds, optical brighteners or a detergent composition, it is preferred that the compounds are present in 0.001 to 5 wt.-%, preferably 0.01 to 2 wt.-%, based on the total weight of the composition. It is in particular preferable, if the composition is an optical brightener or a detergent composition.

The invention is further illustrated by the following, non-limiting examples.

### Examples

### Example 1: Preparation of [1,1'-biphenyl]-4,4'-diylbis(phenylphosphine oxide)

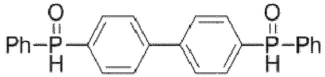

In a Schlenk flask under an atmosphere of argon 4,4'-dibromobiphenyl (4.0 g, 12.8 mmol) was solved in dry Et₂O (60 mL) and dry benzene (10 mL). The solution was cooled to -78° C. Afterwards nBuLi (1.6 M in hexane, 16.8 mL) was added dropwise over 1 hr. The solution was allowed to warm up to room temperature and stirred for another 4 hrs. In a second Schlenk flask under an atmosphere of argon P,P-dichlorophenylphosphine (4.8 g, 26.9 mmol) was solved in dry Et₂O (60 mL) and cooled to -78° C. To this solution was added the first suspension dropwise via canula over appr. 15 min. The first vessel was rinsed with dry Et₂O (20 mL) and the content added to the second via canula. The mixture was then allowed to warm up to room temperature. After stirring over night the reaction was quenched by addition of water, brine and sat. aq. NH₄Cl. The phases were separated and the aq. phase extracted twice with DCM. The combined organic phases were dried over Na2SO4, filtered and concentrated under reduced pressure. The crude product was purified by column chromatography (silica gel; DCM:MeOH, 60:1) to afford 1 as a colorless foam (2.56 g, 6.36 mmol, 50%).
R_{f} = 0.16 (EE:DCM:acetone:MeOH; 20:5:5:1).
FTIR (film): *ν̃* = 3415, 2331, 1597, 1438, 1139, 1125, 943, 815, 717, 696 cm⁻¹.
¹H-NMR (300 MHz, CDCl₃): δ = 8.14 (d, J = 482.2 Hz, 2H, PH), 7.86 - 7.68 (m, 12H, Ar-H), 7.64 - 7.48 (m, 6H, Ar-H) ppm.
¹³C-NMR (101 MHz, CDCl₃): δ = 127.7 (d, J = 13.1 Hz, CH, 4C), 129.0 (d, J = 12.9 Hz, CH, 4C), 130.7 (d, J = 11.6 Hz, CH, 4C), 131.1 (d, J = 103.6 Hz, C, 2C), 131.4 (d, J = 11.7 Hz, CH, 4C), 132.2 (d, J = 108.8 Hz, C, 2C), 132.7 (d, J = 2.9 Hz, C, 2C), 143.9 (C, 2C) ppm.
³¹P-NMR (162 MHz, CDCl₃) δ = 20.9 ppm.
MS (ESI): 403 ([M+H]+, 7%), 425 ([M+Na]⁺, 100%), 626 (28%), 827 ([2M+Na]⁺, 7%), 1229 ([3M+Na]⁺, 3%).
HRMS (ESI) Exact mass calculated for C₂₄H₂₀O₂P₂Na ([M+Na]⁺): 425.0831, found: 425.0832.

### Example 2: Preparation of 1,4-phenylenbis(phenylphosphine oxide)

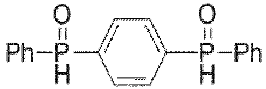

In a Schlenk flask under an atmosphere of argon 1,4-dibromobenzene (756 mg, 3.21 mmol) was solved in dry Et₂O (20 mL). The solution was cooled to -78° C. Afterwards nBuLi (1.6 M in hexane, 4.2 mL) was added dropwise over 1 hr. The solution was allowed to warm up to room temperature and stirred for another 4 hrs. In a second Schlenk flask under an atmosphere of argon P,P-dichlorophenylphosphine (1.2 g, 6.73 mmol) was solved in dry Et₂O (20 mL) and cooled to -78° C. To this solution was added the first suspension dropwise via canula over appr. 15 min. The first vessel was rinsed with dry Et₂O (10 mL) and the content added to the second via canula. The mixture was then allowed to warm up to room temperature. After stirring over night the reaction was quenched by addition of water, brine and sat. aq. NH₄Cl. The phases were separated and the aq. phase extracted twice with DCM. The combined organic phases were dried over Na₂SO₄, filtered and concentrated under reduced pressure. The crude product was purified by column chromatography (silica gel; EE:DCM:MeOH; 20:10:1) to afford 2 as a colorless foam (300 mg, 919 µmol, 29%).
R_{f} = 0.14 (EE:DCM:MeOH; 20:10:1).
m.p.: 102-104° C.
FTIR (film): *ν̃* = 2357, 1644, 1542, 1437, 1379, 1185, 1096, 932, 822, 747, 691 cm⁻¹.
¹H-NMR (300 MHz, CDCl₃): δ = 8.11 (d, J = 485.7 Hz, 2H, PH), 7.89 - 7.79 (m, 4H, Ar-H), 7.75 - 7.65 (m, 4H, Ar-H), 7.64 - 7.57 (m, 2H, Ar-H), 7.56 - 7.48 (m, 4H, Ar-H) ppm.
¹³C-NMR (101 MHz, CDCl3): δ = 129.1 (d, J = 13.3 Hz, CH, 4C), 130.6 (d, J = 12.1 Hz, CH, 4C), 131.0 (t, J = 12.1 Hz, CH, 4C), 133.0 (CH, 2C), 136.2 (d, J = 97.8 Hz, C, 2C), 136.3 (d, J = 97.7 Hz, C, 2C) ppm.
³¹P-NMR (122 MHz, CDCl₃) δ = 20.0 ppm.
MS (ESI): 349 ([M+Na]⁺, 100%), 512 ([3M+2Na]²⁺, 40%), 675 ([2M+Na]⁺, 38%), 1001 ([3M+Na]⁺, 10%). HRMS (ESI) Exact mass calculated for C₁₈H₁₆O₂P₂Na ([M+Na]⁺): 349.0518, found: 349.0517.

### Example 3: Preparation of [1,1'-biphenyl]-4,4'-diylbis(oct-1-en-1-yl-(phenyl)phosphine oxide)

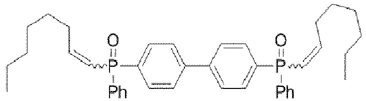

In a vial (3 mL) [1,1'-biphenyl]-4,4'-diylbis(phenylphosphine oxide) (100 mg, 249 µmol) and 1-octyne (110 mg, 994 µmol) were dissolved in DCM (200 µL), sodium dithionite (86.7 mg, 498 mmol) was added and the resulting suspension was stirred for nine days at room temperature. The crude reaction product was subjected to column chromatography (silica gel; EE:DCM:MeOH; 20:10:1) to afford the yellow oil 5 as a mixture of diastereoisomers (36.2 mg, 58.1 µmol, 23%).
R_{f} = 0.49 (EE:DCM:MeOH; 20:10:1).
FTIR (film): *ν̃* = 2925, 2855, 1613, 1437, 1185, 1118, 816, 719, 596 cm⁻¹.
¹H-NMR (400 MHz, CDCl₃): δ = 7.87 - 7.62 (m, 12H, Ar-H), 7.56 - 7.41 (m, 6H, Ar-H), 6.86 - 6.60 (m, 2 H, CH), 6.32 - 6.05 (m, 2 H, CH), 2.59 - 2.49 (m, 4H, CH₂, 5a), 2.35 - 2.24 (m, 4H, CH₂, 5b), 1.55 - 1.00 (m, 16H, CH₂), 0.86 (t, J = 6.8 Hz, 6H, CH₃, 5b) 0.80 (t, J = 6.9 Hz, 6H, CH₃, 5a) ppm.
¹³C-NMR (101 MHz, CDCl₃): δ = 14.0 (2C, CH₃), 22.5 (2C, CH₂), 27.8 (2C, CH₂, 5b) 28.7 (d, J = 1.5 Hz, 2C, CH₂), 28.8 (2C, CH₂), 29.7 (2C, CH₂, 5b) 31.0 (d, J = 8.1 Hz, 2C, CH₂), 31.5 (2C, CH₂), 34.6 (d, J = 16.9 Hz, 2C, CH₂, 5b), 121.0 (d, J = 101.3 Hz, 2C, CH, 5a), 121.2 (d, J = 103.7 Hz, 2C, CH₂, 5b), 127.3 (d, J = 12.2 Hz, 4C, CH), 128.6 (d, J = 12.0 Hz, 4C, CH), 130.90 (d, J = 9.9 Hz, 4C, CH), 131.3 (d, J = 9.9 Hz, 2C, CH, 5b), 131.6 (d, J = 13.5 Hz, 4C, CH), 131.6 (2C, CH), 131.93 (d, J = 10.1 Hz, 2C, C, 5b), 134.1 (d, J = 104.0 Hz, 2C, C), 134.3 (d, J = 104.1 Hz, 2C, 2), 143.1 (2C, C), 143.3 (2C, C, 5b), 153.4 (2C, CH, 5b), 155.6 (2C, CH, 5a) ppm.
³¹P-NMR (162 MHz, CDCl₃) δ = 20.9 ppm.
MS (ESI): 334 (64%), 645 ([M+Na]⁺, 100%).
HRMS (ESI) Exact mass calculated for C₄₀H₄₈O₂P₂Na ([M+Na]⁺): 645.3022, found: 645.30008.

### Example 4: Polymerization reaction of bis-phosphine oxides with bis- and tris-alkynes

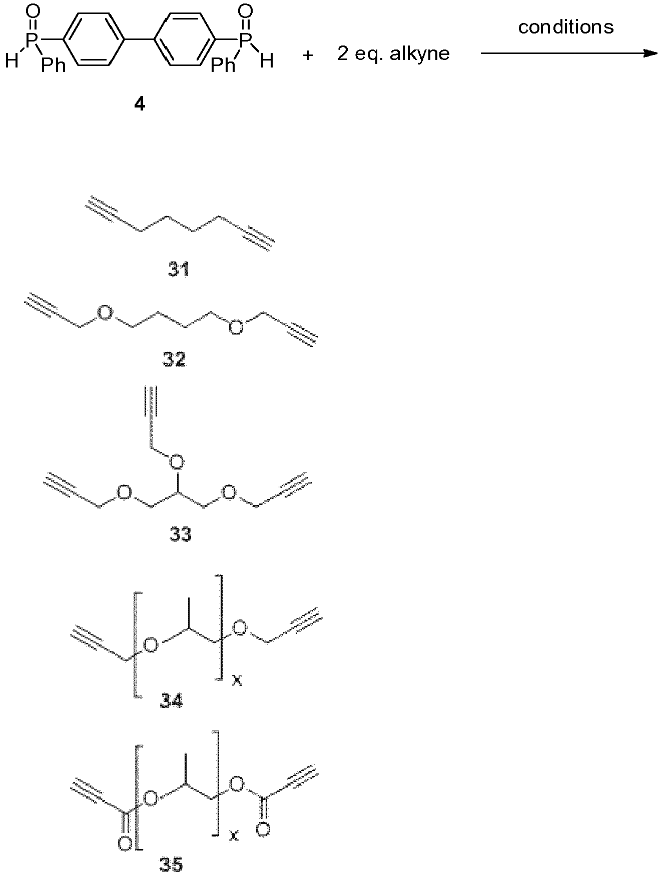

| Entry | alkyne | time | temp. | atm | conditions | max. ratio of s.m. in add. prod. |
|---|---|---|---|---|---|---|
| 1 | 31 | 20 d | 40 °C | air | closed 3 mL vol. vial, stirring, 0.4 mL DCM | 3 (4) + 4 (31) |
| 2 | 32[1] | 13d | r.t. | air | closed 3 mL vol. vial, stirring, 0.1 mL DCM | 2 (4) + 2 (32) |
| 3 | 33[2] | 30 d | r.t. | air | closed 3 mL vol. vial, stirring, 0.1 mL DCM | 3 (4) + 2 (33) |
| 4 | 34 | 24 d | r.t. | air | closed 3 mL vol. vial, stirring, 0.15 mL DCM | - |
| 5 | 34 | 24 d | 40 °C | air | closed 3 mL vol. vial, stirring, 0.15 mL DCM | - |

| | | | | | | |
|---|---|---|---|---|---|---|
| [1] 4 equivalents of 32 used. [2] 2/3 equivalents of 33 used. | | | | | | |

## Claims

1. A method for producing a compound of formula (I): 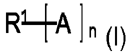 wherein in formula (I)
R¹ is selected from hydrogen or a substituted or unsubstituted C₁₋₄₀ hydrocarbon group, wherein the group optionally contains at least one heteroatom, preferably O, N or S;
n is an integer of 1 to 4, with the proviso if R¹ is hydrogen, n is 1; and
A is a group represented by formula (a): 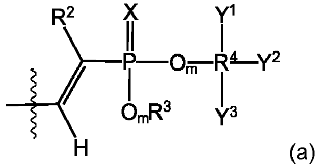
wherein R² is selected from hydrogen or a substituted or unsubstituted C₁₋₄₀ hydrocarbon group, wherein the group optionally contains at least one heteroatom, preferably O, N or S; X is independently O or S;
R³ and R⁴ are independently selected from a substituted or unsubstituted C₁₋₄₀ hydrocarbon group, wherein the group optionally contains at least one heteroatom, preferably O, N or S; m is independently 0 or 1;
Y¹, Y² and Y³ are independently selected from hydrogen, -F, -Cl, -Br, -NH₂, -NHR⁵, with R⁵ being a C₁₋₁₆ alkyl, preferably a C₁₋₄ alkyl, and L, wherein at least one of Y¹, Y² and Y³ is L;
and L is a group of following formula (b) 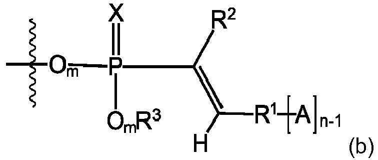 wherein, A, n and R¹ are the same as in formula (I) and R², R³, X and m are the same as defined in formula (a);
comprising or consisting of the steps:
reacting a compound of formula (II) 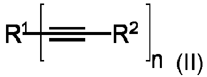 wherein R¹, R², and n are as defined in formula (I),
with a compound of formula (III) 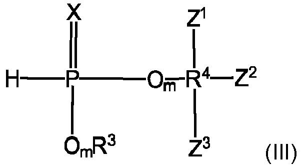 wherein
R4 is the same as defined in formula (I);
Z¹, Z² and Z³ are independently selected from hydrogen, -F, -Cl, -Br, -NH₂, -NHR⁵, with R⁵ being a C₁₋₁₆ alkyl, preferably a C₁₋₄ alkyl, and M, wherein at least one of Z¹, Z² and Z³ is M;
M is a group of following formula (c) 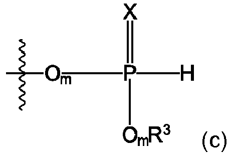 wherein R³, X and m are as defined in formula (I), wherein
the reaction is carried out in the presence of oxygen and the equivalent ratio of compounds of formula (II) and (III) is 1:1.

2. The method according to claim 1, wherein
R¹ and R² are independently selected from hydrogen or a group selected from methyl ,ethyl, substituted or unsubstituted, branched, linear or cyclic C₃₋₄₀ alkyl, wherein the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, wherein the substituted or unsubstituted, branched, linear or cyclic C₃₋₄₀ alkenyl group optionally contains at least one heteroatom, preferably O, N or S; substituted or unsubstituted aryl, which can contain at least one heteroatom, preferably O, N or S, in its ring, wherein the at least one optional substituent of the afore-mentioned groups is selected from - F, -Cl, -Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, - C(=O)OR⁷ with R⁷ being a C₁₋₁₆ alkyl, preferably a C₁₋₆ alkyl.

3. The method according to claim 1 or 2, wherein
R³ and R⁴ are independently selected from a group selected from methyl, ethyl, substituted or unsubstituted, branched, linear or cyclic C₃₋₄₀ alkyl, wherein the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, wherein the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl,-Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

4. The method according to any one of claims 1 to 3, wherein the reaction is performed in an organic solvent, preferably a C₂₋₁₂ alcohol, a C₂₋₁₂ ether, toluene, dimethyl sulfoxide, acetone, benzene, dichloromethane, a mixture thereof or essentially without solvents.

5. The method according to any one of claims 1 to 4, wherein the reaction is performed at 20 to 150°C, preferably at 20 to 80 °C, more preferably 20 to 75 °C, most preferably 20 to 40 °C.

6. The method according to any one of claims 1 to 5, wherein the reaction is performed for 1 minute to 2 weeks, preferably 1 hour to 72 hours, more preferably 5 hours to 24 hours.

7. The method according to any one of claims 1 to 6, wherein the compound of formula (I) has a weight average molecular weight in the range of from 500 g/mol to 1000000 g/mol, preferably from 1000 g/mol to 100000 g/mol, measured with gel permeation chromatography.

8. A compound obtainable by the method of any one of claims 1 to 7.

9. A composition comprising at least one compound according to claim 8 or at least one compound of formula (I): 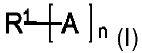 wherein in formula (I)
R¹ is selected from hydrogen or a substituted or unsubstituted C₁₋₄₀ hydrocarbon group, wherein the group optionally contains at least one heteroatom, preferably O, N or S;
n is an integer of 1 to 4, with the proviso if R¹ is hydrogen, n is 1; and
A is a group represented by formula (a): 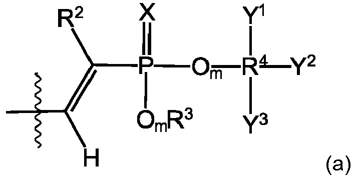
wherein R² is selected from hydrogen or a substituted or unsubstituted C₁₋₄₀ hydrocarbon group, wherein the group optionally contains at least one heteroatom, preferably O, N or S;
X is independently O or S;
R³ and R⁴ are independently selected from a substituted or unsubstituted C₁₋₄₀ hydrocarbon group, wherein the group optionally contains at least one heteroatom, preferably O, N or S; m is independently 0 or 1;
Y¹, Y² and Y³ are independently selected from hydrogen, -F, -Cl, -Br, -NH₂, -NHR⁵, with R⁵ being a C₁₋₁₆ alkyl, preferably a C₁₋₄ alkyl, and L, wherein at least one of Y¹, Y² and Y³ is L; and L is a group of following formula (b) 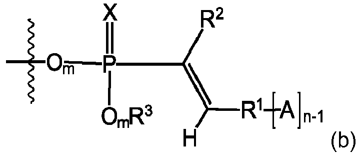 wherein, A, n and R¹ are the same as in formula (I) and R², R³, X and m are the same as defined in formula (a);
and wherein the composition is a composition for lighting applications, optical applications, microelectronic compounds, optical brighteners or is a detergent composition.

10. The composition according to claim 9, wherein
R¹ and R² are independently selected from hydrogen or a group selected from methyl ,ethyl, substituted or unsubstituted, branched, linear or cyclic C₃₋₄₀ alkyl, wherein the substituted or unsubstituted, branched, linear or cyclic C₃₋₄₀ alkyl group can contain at least one heteroatom, preferably O, N or S; allyl; substituted or unsubstituted, branched, linear or cyclic C₃₋₄₀ alkenyl, wherein the substituted or unsubstituted, branched, linear or cyclic C₃₋₄₀ alkenyl group can contain at least one heteroatom, preferably O, N or S; substituted or unsubstituted aryl, which can contain at least one heteroatom, preferably O, N or S, in its ring, wherein the at least one optional substituent of the afore-mentioned groups is selected from -F, -Cl, -Br, =O, -NH₂,-NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

11. The composition according to claim 9 or 10, wherein
R³ and R⁴ are independently selected from a group selected from methyl, ethyl, substituted or unsubstituted, branched, linear or cyclic C₃₋₄₀ alkyl, wherein the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, wherein the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl,-Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

12. The use of at least one compound according to claim 8 or at least one compound of formula (I): 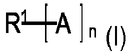 wherein in formula (I)
R¹ is selected from hydrogen or a substituted or unsubstituted C₁₋₄₀ hydrocarbon group, wherein the group optionally contains at least one heteroatom, preferably O, N or S;
n is an integer of 1 to 4, with the proviso if R¹ is hydrogen, n is 1; and
A is a group represented by formula (a): 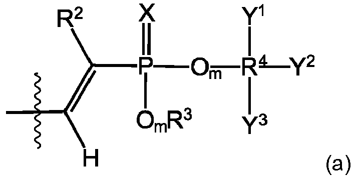
wherein R² is selected from hydrogen or a substituted or unsubstituted C₁₋₄₀ hydrocarbon group, wherein the group optionally contains at least one heteroatom, preferably O, N or S; X is independently O or S;
R³ and R⁴ are independently selected from a substituted or unsubstituted C₁₋₄₀ hydrocarbon group, wherein the group optionally contains at least one heteroatom, preferably O, N or S; m is independently 0 or 1;
Y¹, Y² and Y³ are independently selected from hydrogen, -F, -Cl, -Br, -NH₂, -NHR⁵, with R⁵ being a C₁₋₁₆ alkyl, preferably a C₁₋₄ alkyl, and L, wherein at least one of Y¹, Y² and Y³ is L; and L is a group of following formula (b) 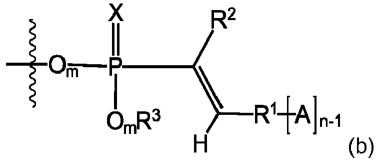 wherein, A, n and R¹ are the same as in formula (I) and R², R³, X and m are the same as defined in formula (a);
in lighting applications, optical applications, microelectronic compounds, optical brighteners or detergent compositions.

13. The use according to claim 12, wherein
R¹ and R² are independently selected from hydrogen or a group selected from methyl ,ethyl, substituted or unsubstituted, branched, linear or cyclic C₃₋₄₀ alkyl, wherein the substituted or unsubstituted, branched, linear or cyclic C₃₋₄₀ alkyl group can contain at least one heteroatom, preferably O, N or S; allyl; substituted or unsubstituted, branched, linear or cyclic C₃₋₄₀ alkenyl, wherein the substituted or unsubstituted, branched, linear or cyclic C₃₋₄₀ alkenyl group can contain at least one heteroatom, preferably O, N or S; substituted or unsubstituted aryl, which can contain at least one heteroatom, preferably O, N or S, in its ring, wherein the at least one optional substituent of the afore-mentioned groups is selected from -F, -Cl, -Br, =O, -NH₂,-NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.

14. The use according to claim 12 or 13, wherein
R³ and R⁴ are independently selected from a group selected from methyl, ethyl, substituted or unsubstituted, branched, linear or cyclic C₃₋₄₀ alkyl, wherein the substituted or unsubstituted, branched, linear or cyclic C₃₋₄₀ alkyl group optionally contains at least one heteroatom, preferably O, N or S; allyl; substituted or unsubstituted, branched, linear or cyclic C₃₋₄₀ alkenyl, wherein the substituted or unsubstituted, branched, linear or cyclic C₃₋₄₀ alkenyl group optionally contains at least one heteroatom, preferably O, N or S; substituted or unsubstituted aryl, which optionally contains at least one heteroatom, preferably O, N or S, in its ring, wherein the at least one optional substituent of the afore-mentioned groups is selected from -F, -Cl, - Br, =O, -NH₂, -NHR⁵, with R⁵ being a C₁₋₁₆ alkyl, preferably a C₁₋₄ alkyl, -NR⁵R⁶, with R⁵ being a C₁₋₁₆ alkyl, preferably a C₁₋₄ alkyl and R⁶ being a C₁₋₄ alkyl, -COOH, -C(=O)H, -C(=O)OR⁷ with R⁷ being a C₁₋₁₆ alkyl, preferably a C₁₋₆ alkyl.
